# EUROPÄISCHE PATENTSCHRIFT

(11) **EP 3 626 140 B1**
(45) Veröffentlichungstag und Bekanntmachung des Hinweises auf die Patenterteilung: **13.07.2022**
(21) Anmeldenummer: 19191958.8
(22) Anmeldetag: 15.08.2019
(51) Int. Cl.: A47J 31/52, A47J 31/00

(54) **ELEKTRONISCHES GERÄT, VORZUGSWEISE HAUSHALTSGERÄT, BESONDERS VORZUGSWEISE GETRÄNKEBEREITER, INSBESONDERE KAFFEEVOLLAUTOMAT**
ELECTRONIC DEVICE, PREFERABLY HOUSEHOLD APPLIANCE, PARTICULARLY PREFERABLY DRINKS MACHINE, IN PARTICULAR COFFEE MACHINE
APPAREIL ÉLECTRONIQUE, DE PRÉFÉRENCE APPAREIL ÉLECTROMÉNAGER, DE PRÉFÉRENCE ENCORE PRÉPARATEUR DE BOISSONS, EN PARTICULIER DISTRIBUTEUR ENTIÈREMENT AUTOMATIQUE À CAFÉ

(30) Priorität: 18.09.2018 DE 102018122807
(43) Veröffentlichungstag der Anmeldung: 25.03.2020
(73) Patentinhaber: Miele & Cie. KG, 33332 Gütersloh (DE)
(72) Erfinder: Kley, Oliver, 33609 Bielefeld (DE); van Pels, Ulrich, 33378 Rheda-Wiedenbrück (DE); Bökenschmidt, Jana, 33613 Bielefeld (DE); Löckmann, Manuela, 33415 Verl (DE); Wolbeck, Michael, 33330 Gütersloh (DE); Sellerberg, Christina, 59494 Soest (DE); Schulte, Dagmar, 33619 Bielefeld (DE)

(56) Entgegenhaltungen:
- WO-A1-03/037151
- WO-A1-2005/081081

## Beschreibung

Die Erfindung betrifft ein elektronisches Gerät, vorzugsweise ein Haushaltsgerät, besonders vorzugsweise einen Getränkebereiter, insbesondere einen Kaffeevollautomaten, gemäß dem Oberbegriff des Patentanspruchs 1 Elektronische Geräte weisen üblicherweise mehrere Bedienelemente wie z.B. Tasten auf, über welche ein Benutzer Eingaben tätigen kann, um den Betrieb des elektronischen Geräts zu beeinflussen. Üblicherweise kann dem Benutzer von dem elektronischen Gerät über ein Anzeigeelement wie z.B. über einen Bildschirm eine Rückmeldung auf seine Eingaben ausgegeben sowie ggfs. weitere Informationen angezeigt werden.

Da elektronische Geräte verschiedenster Art immer preiswerter werden, sind heutzutage elektronische Geräte weit verbreitet. Auch steigen die Möglichkeiten, wozu elektronische Geräte verwendet werden können, immer weiter an, was ebenfalls zur Verbreitung von elektronischen Geräten beiträgt. Gleichzeitig werden die elektronischen Geräte in ihren Funktionen immer umfangreicher. Hiermit steigt auch die Anzahl der möglichen Eingaben, welche einem Benutzer zur Verfügung stehen, um ein elektronisches Gerät zu bedienen und dessen Funktionsumfang auszuschöpfen.

Dies führt bei vielen elektronischen Geräten dazu, dass die Funktionen in einer Menüstruktur organisiert werden, um dem Benutzer die vielen verschiedenen Funktionen strukturiert und ausgewählt anbieten zu können. So können beispielsweise einander ähnliche Funktionen dem Benutzer unter einem Oberbegriff angeboten bzw. angezeigt werden, um diese Funktionen von anderen Themengebieten von Funktionen zu unterscheiden. Hierbei ist es insbesondere üblich, Funktionen für allgemeine Einstellungen des elektronischen Geräts unter einem Menüpunkt "Einstellungen" oder unter einer ähnlichen Bezeichnung zu sammeln und von den Bedienfunktionen zu separieren.

Über die heutzutage ebenfalls immer preiswerter werdenden und hierdurch zunehmend verbreiteten berührungsempfindlichen Bildschirme, welche auch als "Touchscreens" oder "Touchdisplays" bekannt sind, wird die Nutzung von elektronischen Geräten mit vielen verschiedenen Funktionen noch weiter begünstigt, da die Anzeige an die jeweils ausgewählte Menüebene einfach und übersichtlich angepasst werden kann. Hierdurch können auch auf vergleichsweise kleinflächigen Anzeigeelementen viele verschiedene Informationen sowie Eingabemöglichkeiten auf unterschiedlichen Menüebenen angezeigt und genutzt werden.

Beispielsweise stellen Haushaltsgeräte derartige elektronische Geräte wie zuvor beschrieben dar. So können z.B. bei Waschmaschinen verschiedene Waschprogramm auf einer ersten, obersten Menüebene der Menüstruktur auszuwählen und ggfs. jeweils in einer zweiten Menüebenen zu parametrieren sein. Auch können Getränkebereiter wie z.B. Kaffeevollautomaten verschiedene Getränkeprodukte wie z.B. Kaffee, Espresso, Cappuccino und dergleichen zubereiten können. Jedes Getränkeprodukt stellt somit eine Funktion des Kaffeevollautomaten dar, welche auf der ersten, obersten Menüebene ausgewählt und ggfs. auf der zweiten Menüebene z.B. hinsichtlich Kaffeemenge, Wassermenge, Brühtemperatur und dergleichen vom Benutzer parametriert werden kann. Derartige Vorgaben können auch über eine derartige Menüstruktur mit mehreren Ebenen für die Auswahlmöglichkeiten der ersten, obersten Ebene dauerhaft eingestellt werden. Auch können derartige Parametrierungen personenabhängig gespeichert und vom Benutzer ausgewählt werden.

Des Weiteren können auch Service- und Wartungsfunktionen z.B. von der ersten, obersten Menüebene über mehrere Ebenen aufweisende Menüstrukturen ausgeführt werden. Dies kann z.B. bei einem Kaffeevollautomaten als Servicefunktion ein Hinweis auf einen leeren Wassertank oder auf einen leeren Bohnenbehälter sowie als Wartungsfunktion eine Aufforderung zum Entkalken oder zum Entfetten der Brüheinheit sein, auf deren Notwendigkeit der Durchführung der Benutzer von dem Kaffeevollautomaten z.B. durch eine Mitteilung auf dem Anzeigeelement hingewiesen werden kann. In diesem Fall hat der Benutzer verschiedene Handlungen an dem Kaffeevollautomaten auszuführen, um diese zu entkalken bzw. um die Brüheinheit zu entfetten.

Zur Durchführung derartiger vom Benutzer auszuführender Service- und Wartungsfunktionen können hierzu behilfliche Informationen seitens des Kaffeevollautomaten vorhanden sein, welche z.B. über das Anzeigeelement dem Benutzer ausgegeben werden können. Diese Informationen können als kontext-relevante Informationen für Benutzerhandlungen bezeichnet werden und z.B. als Text, als Bilder oder als Video dem Benutzer anzeigen, was dieser zu tun hat.

Nachteilig bei derartigen Informationen, welche sich als kontext-relevante Informationen für Benutzerhandlungen auf einen bestimmten Betriebszustand des elektronischen Geräts wie z.B. auf eine Service- und Wartungsfunktion beziehen oder allgemeiner Natur sind, ist bisher, dass diese zwar in dem elektronischen Gerät vorhanden sind, ein Benutzer diese Informationen jedoch nur dann erhält, wenn er aktiv wird. Mit anderen Worten muss ein Benutzer wissen, dass ihm derartige Informationen zur Verfügung gestellt werden können, um sich diese Informationen anzeigen zu lassen. Weiß er dies nicht, bleiben ihm diese Informationen verborgen und damit ungenutzt.

Nachteilig ist auch, dass der Benutzer, selbst er von dem Vorhandensein ihm nützlicher Informationen weiß, diese in der Menüstruktur aufsuchen und aktivieren muss, um diese Informationen angezeigt zu bekommen. Dies kann beispielsweise über eine Hilfsfunktion geschehen, welche z.B. auf jeder Menüebene vorhanden sein kann. Sind jedoch mehrere Bedien- bzw. Auswahlmöglichkeiten auf dieser Menüebene vorhanden, kann eine Hilfsfunktion, welche sich auf die Menüebene als Ganzes bezieht, zu allgemein sein, um dem Benutzer wirklich behilflich sein zu können.

Aus der WO 2005/081081 A1 ist ein Verfahren zum Anleiten eines Benutzers bei der Bedienung eines Haushaltsgeräts bekannt, wobei das Verfahren den Verfahrensschritt des Ausgebens von Informationen über zumindest eine Ausgabeeinrichtung zum Anleiten des Benutzers hinsichtlich der Bedienung des Geräts aufweist.

Der Erfindung stellt sich somit das Problem, ein elektronisches Gerät der eingangs beschriebenen Art bereitzustellen, so dass einem Benutzer die Benutzung des elektronischen Geräts erleichtert werden kann. Insbesondere sollen Informationen und insbesondere kontext-relevante Informationen für Benutzerhandlungen einfacher zugänglich gemacht und ganz besonders ihm dann angeboten werden können, wenn diese vom Benutzer benötigt werden. Zumindest soll eine Alternative zu bekannten elektronischen Geräten geschaffen werden. Erfindungsgemäß wird dieses Problem durch ein elektronisches Gerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die vorliegende Erfindung ein elektronisches Gerät, vorzugsweise ein Haushaltsgerät, besonders vorzugsweise einen Getränkebereiter, insbesondere einen Kaffeevollautomaten, mit wenigstens einem Anzeigeelement, welches ausgebildet ist, einem Benutzer wenigstens eine Information anzuzeigen, mit wenigstens einem Bedienelement, welches ausgebildet ist, wenigstens eine Eingabe des Benutzers zu erfassen, und mit wenigstens einer Steuerungseinheit, welche ausgebildet ist, die erfasste Eingabe des Benutzers von dem Bedienelement zu erhalten und die dem Benutzer anzuzeigende Information zu erzeugen und an das Anzeigeelement auszugeben, die Steuerungseinheit ferner ausgebildet ist, wenigstens einen Zustand des elektronischen Geräts zu erfassen, und dass die Steuerungseinheit ferner ausgebildet ist, wenigstens die erfasste Eingabe des Benutzers mit wenigstens einem vorbestimmten Kriterium zu vergleichen, wobei das vorbestimmte Kriterium von wenigstens dem erfassten Zustand des elektronischen Geräts abhängt und wobei die anzuzeigende Information vom Ergebnis des Vergleiches abhängt.

Mit anderen Worten kann es auf diese Art und Weise erfindungsgemäß ermöglicht werden, dass einem Benutzer des elektronischen Geräts in Abhängigkeit des Zustands des elektronischen Geräts sowie unter Berücksichtigung wenigstens eines vorbestimmten Kriteriums, wie im Folgenden noch näher erläutert werden wird, Informationen angezeigt werden. Hierdurch können dem Benutzer Informationen angezeigt werden, welche heutzutage bereits bei derartigen elektronischen Geräten vorhanden sein können, jedoch bisher dem Benutzer verborgen bleiben, wenn er von dem Vorhandensein dieser Informationen keine Kenntnis hat bzw. diese nicht aktiv auswählt und sich anzeigen lässt. Dies kann insbesondere für kontextrelevante Informationen gelten, welche in Relation bzw. im Kontext zu einem Zustand des elektronischen Geräts stehen können. Somit kann erfindungsgemäß auf das Bedienverhalten des Benutzers eingegangen und ihm Informationen aktiv zur Verfügung gestellt werden, welche sich auf den aktuellen Zustand des elektronischen Geräts beziehen und ihn genau in diesem Kontext unterstützen können.

Gemäß einem Aspekt der vorliegenden Erfindung weist das vorbestimmte Kriterium wenigstens die Zulässigkeit wenigstens einer Funktion des elektronischen Geräts auf, welche in dem erfassten Zustand des elektronischen Geräts ausgelöst werden kann, wobei die erfasste Eingabe des Benutzers keine zulässige Funktion des elektronischen Geräts auslösen kann. Mit anderen Worten kann von dem elektronischen Gerät auf diese Art und Weise erkannt werden, ob die erfasste Eingabe des Benutzers in dem aktuellen Zustand des elektronischen Geräts überhaupt eine Funktion des elektronischen Geräts auslösen kann oder nicht. Wird eine zulässige Funktion vom Benutzer ausgewählt, so kann diese ausgeführt werden. In einem anderen Fall kann eine Information dem Benutzer angezeigt werden, welche ihn dabei unterstützen kann, eine zulässige Funktion des elektronischen Geräts auszuwählen.

Betrachtet man diesen Aspekt der vorliegenden Erfindung am Beispiel eines Kaffeevollautomaten, so kann der erfasste Zustand des Kaffeevollautomaten derjenige sein, dass der Wassertank leer ist. Die einzige zulässige Funktion des Kaffeevollautomaten in diesem Zustand stellt das Erfassen eines wiederaufgefüllten Wassertanks dar. Dies kann beispielsweise durch wenigstens zwei elektrische Kontakte erfolgen, welche innerhalb des Wassertanks in der Höhe zueinander versetzt angeordnet sind. Werden diese durch eine ausreichende Füllstandshöhe des Wassers elektrisch leitfähig miteinander verbunden, so kann von dem Kaffeevollautomaten erkannt werden, dass eine ausreichende Wassermenge in dem Wassertank vorhanden ist, um ein Kaffeegetränk zubereiten zu können. Anderenfalls ist dies mangels Wassermenge nicht möglich und dies kann dem Benutzer angezeigt werden. Somit liegt in diesem Zustand eine Aufforderung des Kaffeevollautomaten an den Benutzer vor, dass der Wassertank aufzufüllen ist. Die von dem Kaffeevollautomaten erwartete Handlung des Benutzers ist in diesem Zustand somit, dass der Wassertank wieder aufgefüllt ist. Dies kann über die derzeit einzig zulässige Funktion, nämlich das Erkennen des ausreichend gefüllten Wassertanks, vom Kaffeevollautomaten erfasst werden.

Führt der Benutzer jedoch in diesem Zustand Eingaben aus, wie zum Beispiel das Anwählen der Getränkezubereitung eines Kaffeegetränks, so stellt dies keine zulässige Funktion des Kaffeevollautomaten in dem aktuellen Zustand dar. Da üblicherweise eine Information an den Benutzer, dass der Wassertank aufzufüllen ist, bereits vorliegt, da eine unzureichende Wassermenge von dem Kaffeevollautomaten bereits zuvor erkannt wurde, kann erfindungsgemäß darüber hinaus in Reaktion auf das erkannte unzulässige Benutzerverhalten nun ein konkreterer Hinweis auf das Auffüllen des Wassertanks ausgegeben werden. Dies können Hilfeinformationen als kontextrelevante Informationen zum aktuellen Zustand des elektronischen Geräts sein, welche die genaueren Arbeitsschritte zum Auffüllen des Wassertanks beschreiben können. Hierdurch kann der Benutzer in Reaktion auf sein als unzulässig erkanntes Verhalten bei der Durchführung einer zulässigen und erwarteten Handlung besser als bisher bekannt unterstützt werden.

Gemäß der vorliegenden Erfindung ist die Steuerungseinheit ferner ausgebildet, eine Anzahl von erfassten Eingaben des Benutzers zu erfassen, wobei das vorbestimmte Kriterium wenigstens das Erreichen oder Überschreiten einer vorbestimmten Anzahl von erfassten Eingaben des Benutzers ist, ohne dass eine Funktion des elektronischen Geräts ausgelöst wurde. Mit anderen Worten kann auf diese Art und Weise durch das elektronische Gerät erkannt werden, dass ein Benutzer zwar mehrere Eingaben getätigt hat, welche unter Berücksichtigung der Menüstruktur zu einer Auslösung einer Funktion des elektronischen Geräts hätten führen können, dies jedoch nicht getan haben. Hieraus kann von dem elektronischen Gerät geschlussfolgert werden, dass der Benutzer sich bei der Durchführung seiner Eingaben nicht sicher ist. Entsprechend kann aktiv eine Information angezeigt werden, um den Benutzer in Abhängigkeit des aktuellen Zustands des elektronischen Geräts dabei zu unterstützen, eine Funktion des elektronischen Geräts auszulösen.

Gemäß der vorliegenden Erfindung ist die Steuerungseinheit ferner ausgebildet, eine Zeitdauer nach einer erfassten Eingabe des Benutzers zu erfassen, wobei das vorbestimmte Kriterium wenigstens das Erreichen oder Überschreiten einer vorbestimmten Zeitdauer nach einer erfassten Eingabe des Benutzers ist, ohne dass eine Funktion des elektronischen Geräts ausgelöst wurde. Auch auf diese Art und Weise kann, wie zuvor beschrieben, auf eine Unsicherheit des Benutzers in der Bedienung des elektronischen Geräts geschlossen werden, da dieser zwar wenigstens eine Eingabe getätigt hat, jedoch anschließend ein Zeitraum vergangen ist, ohne dass eine Funktion des elektronischen Geräts ausgelöst wurde. Auch auf diese Art und Weise kann von dem elektronischen Gerät darauf geschlussfolgert werden, dass der Benutzer bei der Bedienung des Geräts aktiv unterstützt werden kann.

Gemäß der vorliegenden Erfindung ist die Steuerungseinheit ferner ausgebildet, eine Anzahl von erfassten Eingaben des Benutzers zu erfassen, und die Steuerungseinheit ist ferner ausgebildet, eine Zeitdauer nach einer erfassten Eingabe des Benutzers zu erfassen, wobei das vorbestimmte Kriterium wenigstens das Unterschreiten einer vorbestimmten Anzahl von Eingaben vom Benutzer innerhalb einer vorbestimmten Zeitdauer nach einer erfassten Eingabe des Benutzers ist, ohne dass eine Funktion des elektronischen Geräts ausgelöst wurde. Auch auf diese Art und Weise kann eine Unsicherheit des Benutzers bei der Bedienung des elektronischen Geräts erkannt werden, da aus dem Umstand, dass der Benutzer innerhalb des vorbestimmten Zeitraums unerwartet wenige Eingaben getätigt hat, auf seine Unsicherheit geschlossen werden kann. Auch in diesem Fall kann der Benutzer durch die Ausgabe von zusätzlichen Informationen in Relation zum aktuellen Zustand des elektronischen Geräts bei der Bedienung des elektronischen Geräts unterstützt werden. Gemäß einem weiteren Aspekt der vorliegenden Erfindung hängt die vorbestimmte Anzahl von erfassten Eingaben des Benutzers und bzw. oder die vorbestimmte Zeitdauer nach einer erfassten Eingabe des Benutzers von dem erfassten Zustand des elektronischen Geräts ab. Auf diese Art und Weise kann bei den zuvor beschriebenen Kriterien ferner der aktuelle Zustand des elektronischen Geräts berücksichtigt werden. Diesem Aspekt der vorliegenden Erfindung liegt die Erkenntnis zugrunde, dass je nach Zustand des elektronischen Geräts unterschiedliche Bedieneingaben für den Benutzer zulässig bzw. unzulässig sein können. Dies kann über die entsprechende Anpassung der vorbestimmten Anzahl von erfassten Eingaben des Benutzers und bzw. oder der vorbestimmten Zeitdauer nach einer erfassten Eingabe des Benutzers berücksichtigt werden.

Gemäß einem weiteren Aspekt der vorliegenden Erfindung ist die Steuerungseinheit ferner ausgebildet, eine ausgewählte Menüebene zu erfassen, wobei das vorbestimmte Kriterium und bzw. oder eine vorbestimmte Anzahl von erfassten Eingaben des Benutzers und bzw. oder eine vorbestimmte Zeitdauer nach einer erfassten Eingabe des Benutzers ferner von der erfassten Menüebene abhängt. Auf diese Art und Weise kann erfindungsgemäß berücksichtigt werden, dass in unterschiedlichen Menüebenen einer Menüstruktur unterschiedliche Auswahlmöglichkeiten für den Benutzer zur Verfügung stehen können. Somit kann auch in Abhängigkeit dieser Information eine Unterstützung des Benutzers bei der Benutzung des elektronischen Geräts erfolgen.

Gemäß einem weiteren Aspekt der vorliegenden Erfindung ist die erfasste Menüebene eine letzte Menüebene. Unter einer letzten Menüebene wird die unterste Menüebene einer Menüstruktur verstanden, welche keine weiteren Verzweigungen mehr ermöglicht und der Auslösung einer Funktion des elektronischen Geräts dient. Hat somit ein Benutzer eine letzte Menüebene erreicht, so ist zu erwarten, dass eine hierdurch zur Verfügung gestellte Funktion des elektronischen Geräts auch von ihm ausgewählt und ausgelöst wird. Wird dies nicht vom Benutzer getan, so kann auch auf diese Art und Weise auf eine Unsicherheit in der Bedienung des elektronischen Geräts geschlussfolgert und eine entsprechende Information eingeblendet werden, welche den Benutzer unterstützen kann. Dies gilt insbesondere dann, wenn der Benutzer eine letzte Menüebene erreicht hat und innerhalb eines vorbestimmten, vorzugsweise vergleichsweise kurzen, Zeitraums die hierdurch zur Verfügung gestellte Funktion nicht auslöst.

Gemäß einem weiteren Aspekt der vorliegenden Erfindung weist das vorbestimmte Kriterium wenigstens das Erreichen einer höheren Menüebene auf. Mit anderen Worten kann auf diese Art und Weise erkannt werden, dass ein Benutzer in einer Menüstruktur von einer unteren Ebene wieder zurück auf eine höhere Ebene gewechselt hat. Da zum Auslösen einer Funktion des elektronischen Geräts jedoch das Erreichen einer untersten letzten Menüebene erforderlich ist, kann aus dem Verhalten des Benutzers, sich wieder von einer letzten Menüebene in der Menüstruktur nach oben zu bewegen, geschlussfolgert werden, dass der Benutzer in der Bedienung des elektronischen Geräts unsicher ist. Auch in diesem Fall kann er durch das Anzeigen von Information bei der Bedienung des elektronischen Geräts unterstützt werden.

Gemäß einem weiteren Aspekt der vorliegenden Erfindung ist die vorbestimmte Information eine Handlungsanweisung an den Benutzer, vorzugsweise ein Video. Auf diese Art und Weise kann der Benutzer bei der Bedienung des elektronischen Geräts durch kontextrelevante Informationen unterstützt werden, indem ihm anstelle einer reinen Informationsmitteilung konkretere Handlungsanweisungen gegeben werden, welche zum aktuellen Zustand, das heißt zum aktuellen Kontext des elektronischen Geräts, passen. Beispielsweise kann der Benutzer am Beispiel eines Kaffeevollautomaten genauer darauf hingewiesen werden, welche Handlung er durchzuführen hat, um einen leeren Wassertank wieder aufzufüllen oder um ein Entkalkungsprogramm der Maschine zu starten.

Dies vorzugsweise über ein Video dem Benutzer anzuzeigen, kann dahingehend vorteilhaft sein, da ein durchgehender Handlungsablauf dargestellt werden kann, welches das Nachvollziehen und Ausführen der entsprechenden Handlung für den Benutzer vereinfachen und veranschaulichen kann.

Die vorliegende Erfindung betrifft auch ein Verfahren zum Betrieb eines elektronischen Geräts, vorzugsweise eines Haushaltsgeräts, besonders vorzugsweise eines Getränkebereiters, insbesondere eines Kaffeevollautomaten, wie zuvor beschrieben mit wenigstens den Schritten:
- Erfassen wenigstens einer Eingabe des Benutzers,
- Erfassen wenigstens eines Zustands des elektronischen Geräts,
- Vergleichen wenigstens der erfassen Eingabe des Benutzers mit wenigstens einem vorbestimmten Kriterium, und
- dem Benutzer wenigstens eine Information anzeigen,
wobei das vorbestimmte Kriterium von wenigstens dem erfassten Zustand des elektronischen Geräts abhängt und wobei die anzuzeigende Information vom Ergebnis des Vergleichens abhängt.

Auf diese Art und Weise kann ein Arbeitsverfahren des elektronischen Geräts umgesetzt werden, wie zuvor anhand der strukturellen Merkmale des entsprechenden elektronischen Geräts bereits beschrieben. Auf diese Art und Weise können die zuvor beschriebenen Eigenschaften und Vorteile durch ein Verfahren umgesetzt werden, welche zur Vermeidung von Wiederholungen an dieser Stelle nicht erneut ausgeführt werden sollen.

Gemäß einem Aspekt der vorliegenden Erfindung weist das Verfahren wenigstens den weiteren Schritt auf:
- Erfassen einer Anzahl von erfassten Eingaben des Benutzers.

Hierdurch können auch diese entsprechenden Eigenschaften und Vorteile, wie zuvor anhand des elektronischen Geräts beschrieben, durch das erfindungsgemäße Verfahren umgesetzt werden.

Gemäß einem weiteren Aspekt der vorliegenden Erfindung weist das Verfahren wenigstens den weiteren Schritt auf:
- Erfassen einer Zeitdauer nach einer erfassten Eingabe des Benutzers.

Auf diese Art und Weise können auch diese Eigenschaften Vorteile, wie zuvor anhand des elektronischen Geräts beschrieben, durch das erfindungsgemäße Verfahren umgesetzt werden.

Gemäß einem weiteren Aspekt der vorliegenden Erfindung weist das Verfahren wenigstens den weiteren Schritt auf:
- Erfassen einer ausgewählten Menüebene.

Auch auf diese Art und Weise können die zuvor beschriebenen Eigenschaften und Vorteile des elektronischen Geräts durch das erfindungsgemäße Verfahren angewendet werden.

Ein Ausführungsbeispiel der Erfindung ist in den Zeichnungen rein schematisch dargestellt und wird nachfolgend näher beschrieben. Es zeigt
- Figur 1: eine perspektivische Darstellung eines erfindungsgemäßen elektronischen Geräts am Beispiel eines Kaffeevollautomaten; und
- Figur 2: ein Ablaufdiagramm eines erfindungsgemäßen Verfahrens.

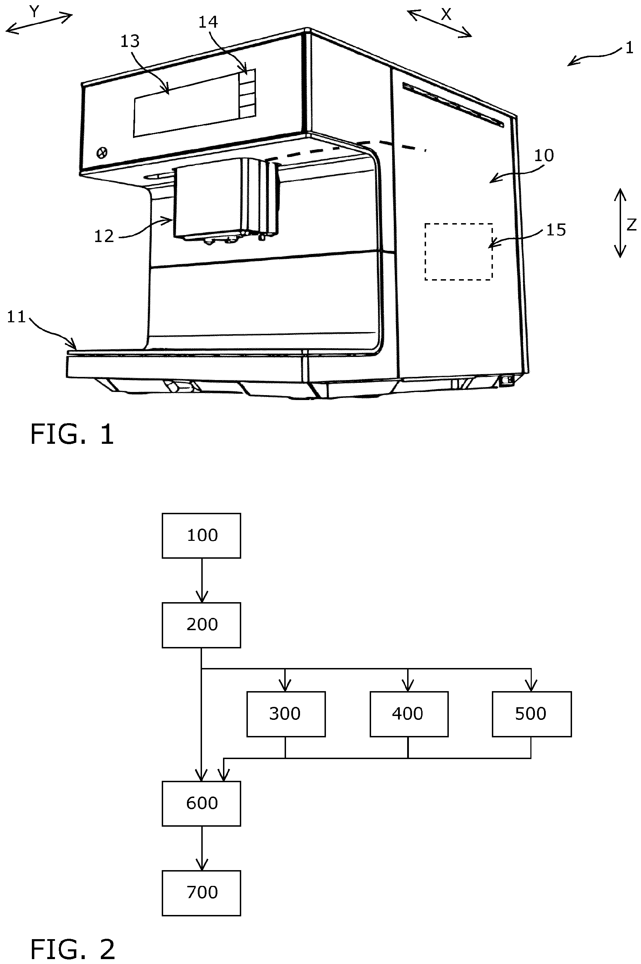

Die Figur 1 wird in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

Fig. 1 zeigt eine perspektivische Darstellung eines erfindungsgemäßen elektronischen Geräts 1 am Beispiel eines Kaffeevollautomaten 1. Das erfindungsgemäße elektronische Gerät 1 kann ein Haushaltsgerät 1, insbesondere ein Getränkebereiter 1 und ganz besonders ein Kaffeevollautomat 1, sein, aufweichen hier beispielhaft eingegangen werden soll.

Der Kaffeevollautomat 1 weist ein Gehäuse 10 auf. Im unteren Bereich des Gehäuses 10 ist eine Auffangschale 11 vorgesehen, welche sich in der Tiefe X nach vorne einem Benutzer zugewandt erstreckt und auf welcher ein Gefäß, wie zum Beispiel eine Kaffeetasse, von dem Benutzer in der Höhe Z von oben abgestellt werden kann. Oberhalb der Auffangschale 11 bzw. des abgestellten Gefäßes ist eine Einfülleinheit 12 vorgesehen, über welche ein zubereitetes Getränk, wie zum Beispiel ein Kaffee, in das Gefäß, wie zum Beispiel die Kaffeetasse, eingefüllt werden kann.

Oberhalb der Einfülleinheit 12 ist ein Anzeigeelement 13 vorgesehen, welches an seiner rechten Seite eine Mehrzahl von Bedienelementen 14 aufweist. Das Anzeigeelement 13 und das Bedienelement 14 können auch gemeinsam als Touchscreen 13, 14 realisiert sein. Mittels des Touchscreens 13, 14 können dem Benutzer zum einen Informationen angezeigt und ihm gleichzeitig die Möglichkeit gegeben werden, Eingaben an den Kaffeevollautomaten 1 zu tätigen. Die erhaltenen Eingaben können an eine Steuerungseinheit 15, welche sich innerhalb des Gehäuses 10 des Kaffeevollautomaten 1 befindet, weitergegeben werden, um dort verarbeitet zu werden. Das Ergebnis der Verarbeitung kann von der Steuerungseinheit 15 über den Touchscreen 13, 14 dem Benutzer angezeigt werden. Somit ist über den Touchscreen 13, 14 eine Interaktion mit einem Benutzer möglich.

Möchte sich ein Benutzer ein Kaffeegetränk von dem Kaffeevollautomaten 1 zubereiten lassen, so ist es bisher üblich, dass der Benutzer eine entsprechende Eingabe über den Touchscreen 13, 14 tätigt. Hierbei werden ihm verschiedene Informationen sowie Auswahlmöglichkeiten in Form einer Menüstruktur angeboten. Innerhalb der Menüstruktur können verschiedene Ebenen vorhanden sein, welche von oben nach unten immer konkreter in den Handlungsmöglichkeiten werden, bis schließlich auf einer untersten Menüebene eine Handlung vom Benutzer ausgewählt bzw. bestätigt werden kann, um eine entsprechende Funktion des Kaffeevollautomaten 1 auszulösen. Der Weg durch die Menüstruktur von oben nach unten kann als Klickpfad eines Benutzers in der Menüstruktur bezeichnet werden.

In Abhängigkeit des Zustands des Kaffeevollautomaten 1 können jedoch gewisse Handlungen des Benutzers erforderlich sein bzw. gewisse Funktionen des Kaffeevollautomaten 1 nicht zur Verfügung stehen. Beispielsweise kann ein Wassertank des Kaffeevollautomaten 1 (nicht dargestellt) durch die vorherige Benutzung ausreichend entleert worden sein, so dass eine Zubereitung eines weiteren Kaffeegetränks nicht mehr zur Verfügung steht. Dies kann von dem Kaffeevollautomaten 1 aufgrund einer mangelnden elektrischen Verbindung zwischen zwei Elektroden innerhalb des Wassertanks erkannt werden. In Reaktion auf das Erkennen dieses Zustands kann von dem Kaffeevollautomaten 1 dem Benutzer über den Touchscreen 13, 14 eine entsprechende Information angezeigt werden, dass der Wassertank zu befüllen ist. Auch kann im Laufe der Benutzung ein Entfetten der Brüheinheit sowie ein Entkalken des Kaffeevollautomaten 1 erforderlich sein. Ebenso können ein Bohnenbehälter des Kaffeevollautomaten 1 (nicht dargestellt) leer sowie ein Kaffeesatzbehälter bzw. eine Abtropfschale des Kaffeevollautomaten 1 (nicht dargestellt) voll sein, so dass diese entleert und gegebenenfalls gereinigt werden müssen. All diese Zustände können von dem Kaffeevollautomaten 1 auf vergleichbare Art und Weise erkannt und eine entsprechende Information dem Benutzer über den Touchscreen 13, 14 angezeigt werden. Dies gilt auch für Gerätefehler im Allgemeinen.

Bisher warten übliche Kaffeevollautomaten 1 in einem derartigen Fall darauf, dass der Benutzer auf die ihm angezeigte Meldung reagiert und die entsprechenden richtigen Handlungen ausführt, deren Ergebnisse zum Beispiel sensorisch oder durch das Starten eines Ablaufs zum Entkalken bzw. zum Reinigen der Maschine erkannt werden können. Solange dies nicht der Fall ist, wartet der Kaffeevollautomat 1 unabhängig vom Verhalten des Benutzers. Somit liegt es an dem Benutzer, diese Handlungen auszuführen oder sich über genauere Maßnahmen zu informieren. Dies kann gegebenenfalls über angebotene Hilfefunktionen des Touchscreens 13, 14 des Kaffeevollautomaten 1 geschehen, welche jedoch vom Benutzer erkannt und aktiv ausgewählt werden müssen. Dies kann die Bedienung des Kaffeevollautomaten 1 für den Benutzer erschweren bzw. zu Frustration führen, wenn das gewünschte Zubereiten eines Kaffeegetränks hierdurch verhindert bzw. verzögert wird.

Erfindungsgemäß kann der Benutzer in diesen Situationen aktiv von dem Kaffeevollautomaten 1 unterstützt werden, welches im Folgenden anhand des Ablaufdiagramms eines erfindungsgemäßen Verfahrens gemäß der Fig. 2 beschrieben werden soll. Diese Verfahrensschritte können durch die Steuerungseinheit 15 des Kaffeevollautomaten 1 ausgeführt werden, weshalb die entsprechenden Verfahrensschritte und die hierdurch erreichten Vorteile auch der Steuerungseinheit 15 als strukturelle Merkmale zugeschrieben werden können.

In einem ersten Schritt 100 erfolgt ein Erfassen wenigstens einer Eingabe des Benutzers an den Kaffeevollautomaten 1 über dessen Touchscreen 13, 14. Es können auch mehrere aufeinanderfolgende Eingaben, insbesondere innerhalb eines vorbestimmten Zeitraums, erfasst werden.

Ferner wird in einem zweiten Schritt 200 ein Zustand des Kaffeevollautomaten 1 erfasst. Dieser Zustand kann, wie zuvor beschrieben, ein unzureichend gefüllter Wassertank, ein leerer Kaffeebohnenbehälter sowie eine zu entfettende Brüheinheit und dergleichen sein. Aus dem erfassten Zustand des Kaffeevollautomaten 1 ergeben sich für den Kaffeevollautomaten 1 mehrere mögliche zulässige Handlungen des Benutzers oder gegebenenfalls auch lediglich eine zulässige Handlung des Benutzers, welche in diesem Zustand ausgeführt werden kann.

Ob der Benutzer eine derart zulässige Handlung ausführt oder nicht, kann anhand eines vom Zustand abhängigen Kriteriums von dem Kaffeevollautomaten 1 überprüft werden. Beispielsweise kann eine Eingabe des Benutzers in einem weiteren Schritt 600 mit dem vorbestimmten Kriterium verglichen werden. Ist beispielsweise der Wassertank unzureichend gefüllt und der Benutzer wählt dennoch die Zubereitung eines Kaffeegetränks aus, so kann diese Auswahl des Benutzers als Eingabe als unzulässig erkannt werden.

In Abhängigkeit dieses Ergebnisses des Vergleichens 600 kann ein Anzeigen 700 einer Information an den Benutzer erfolgen. Dies kann beispielsweise ein Video sein, in welchem dem Benutzer die Handlungen dargestellt werden, welche er zum Auffüllen des Wassertanks auszuführen hat. Dies kann den Benutzer, besser als bisher bekannt, bei der Benutzung des Kaffeevollautomaten 1 unterstützen, da nicht lediglich eine Information angezeigt wird, dass ein Wassertank leer ist, sondern da erkannt wird, dass der Benutzer auf diese Information nicht reagiert und zusätzliche Unterstützung ihm nützlich sein könnte. Ein entsprechendes Video mit den nun auszuführenden Handlungsanweisungen zum Auffüllen eines Wassertanks, welche das Abnehmen eines Deckels eines Wassertanks, das Abnehmen des Wassertanks, das Auffüllen des Wassertanks unter einem Wasserhahn sowie das erneute Einsetzen und Verschließen des Wassertanks in den Kaffeevollautomaten 1 beinhalten können, kann hierbei hilfreich sein.

Auch kann in einem dritten Schritt 300 ein Erfassen einer Anzahl von erfassten Eingaben des Benutzers erfolgen. Diese können mit einer vorbestimmten Anzahl von erfassten Eingaben des Benutzers verglichen werden, welche von dem aktuellen Zustand des Kaffeevollautomaten 1 abhängen kann. Ist diese vorbestimmte Anzahl von erfassten Eingaben des Benutzers erreicht, ohne dass eine Funktion des Kaffeevollautomaten 1 ausgelöst wurde, wie beispielsweise ein Erkennen eines ausreichend gefüllten Wassertanks, kann auch hieraus darauf geschlossen werden, dass der Benutzer die angezeigte Information des zu füllenden Wassertanks nicht erkannt hat und hierauf erneut gründlicher aufmerksam gemacht werden sowie durch ein Video der Handlungen unterstützt werden kann.

Gemäß einem vierten Schritt 400 kann ein Erfassen einer Zeitdauer nach einer erfassten Eingabe des Benutzers erfolgen. Denn wenn ein Benutzer nach einer erfolgten Eingabe für einen gewissen vorbestimmten Zeitraum untätig bleibt, so kann auch hieraus geschlossen werden, dass er bei der Bedienung des Kaffeevollautomaten 1 unschlüssig ist. Auch hierbei kann er in diesem Fall durch ein entsprechendes Video in Abhängigkeit des aktuellen Zustands des Kaffeevollautomaten 1 unterstützt werden.

Werden die Informationen gemäß dem dritten Schritt 300 des Erfassens einer Anzahl von erfassten Eingaben des Benutzers sowie einem vierten Schritts 400 des Erfassens einer Zeitdauer nach einer erfassten Eingabe des Benutzers miteinander kombiniert, so kann aus dem Unterschreiten einer vorbestimmten Anzahl von Eingaben des Benutzers innerhalb der vorbestimmten Zeitdauer nach einer erfassten Eingabe des Benutzers ebenfalls geschlussfolgert werden, dass der Benutzer in der Bedienung des elektronischen Geräts 1 unsicher ist. Auch in diesem Fall kann eine kontextabhängige Information in Form eines Videos dem Benutzer über den Touchscreen 13, 14 ausgegeben werden.

Schließlich kann in einem fünften Schritt 500 auch ein Erfassen der ausgewählten Menüebene erfolgen und dies berücksichtigt werden. Beispielsweise kann auf diese Art und Weise erkannt werden, dass sich der Benutzer bereits in einer untersten, letzten Menüebene befindet und somit unmittelbar eine Funktion des Kaffeevollautomaten 1 auslösen könnte. Wird dies für einen vorbestimmten Zeitraum nicht getan, kann auch auf diese Art und Weise darauf geschlossen werden, dass der Benutzer sich in der Menüführung nicht an der Stelle befindet, welche er eigentlich erreichen wollte. Auch in diesem Fall kann eine entsprechende kontextrelevante Information für den Benutzer über den Touchscreen 13, 14 angezeigt werden. Dies kann ebenso dann gelten, wenn ein Benutzer innerhalb der Menüstruktur eine untere Menüebene wieder verlässt und zu einer höheren Menüebene zurückkehrt. Auch dies kann als Unsicherheit der Bedienung seitens des Benutzers gewertet werden.

Auf die zuvor beschriebenen Arten und Weisen kann der Benutzer in Abhängigkeit verschiedener Zustände des Kaffeevollautomaten 1 sowie unter Berücksichtigung der verschiedenen zuvor beschriebenen Kriterien bei der Bedienung des Kaffeevollautomaten 1 als beispielhaftes elektronisches Gerät 1 unterstützt werden. Dies kann den Komfort der Bedienung sowie die Verwendbarkeit für den Benutzer erhöhen und ihm eine größere Freude bei der Nutzung des Kaffeevollautomaten 1 bzw. eines anderen elektronischen Gerätes 1 bereiten.

### Bezugszeichenliste (Bestandteil der Beschreibung)

- X: Längsrichtung; Tiefe
- Y: Querrichtung; Breite
- Z: vertikale Richtung; Höhe

- 1: elektronisches Gerät; Haushaltsgerät; Getränkebereiter; Kaffeevollautomat
- 10: Gehäuse
- 11: Auffangschale
- 12: Einfülleinheit
- 13: Anzeigeelement; Touchscreen
- 14: Bedienelement; Touchscreen
- 15: Steuerungseinheit

- 100: Erfassen Eingabe des Benutzers
- 200: Erfassen Zustand des elektronischen Geräts
- 300: Erfassen Anzahl von erfassten Eingaben des Benutzers
- 400: Erfassen Zeitdauer nach erfasster Eingabe des Benutzers
- 500: Erfassen ausgewählte Menüebene
- 600: Vergleichen erfasste Eingabe des Benutzers mit vorbestimmtem Kriterium
- 700: Anzeigen Information an Benutzer

## Patentansprüche

1. Elektronisches Gerät (1), vorzugsweise Haushaltsgerät (1), besonders vorzugsweise Getränkebereiter (1), insbesondere Kaffeevollautomat (1),
mit wenigstens einem Anzeigeelement (13), welches ausgebildet ist, einem Benutzer wenigstens eine Information anzuzeigen,
mit wenigstens einem Bedienelement (14), welches ausgebildet ist, wenigstens eine Eingabe des Benutzers zu erfassen, und
mit wenigstens einer Steuerungseinheit (15), welche ausgebildet ist, die erfasste Eingabe des Benutzers von dem Bedienelement (14) zu erhalten und die dem Benutzer anzuzeigende Information zu erzeugen und an das Anzeigeelement (13) auszugeben,
die Steuerungseinheit (15) ferner ausgebildet ist, wenigstens einen Betriebszustand des elektronischen Geräts (1) zu erfassen, und dass
die Steuerungseinheit (15) ferner ausgebildet ist, wenigstens die erfasste Eingabe des Benutzers mit wenigstens einem vorbestimmten Kriterium zu vergleichen,
wobei das vorbestimmte Kriterium von wenigstens dem erfassten Betriebszustand des elektronischen Geräts (1) abhängt, und
wobei die anzuzeigende Information vom Ergebnis des Vergleichens (600) abhängt,
**dadurch gekennzeichnet, dass**
die Steuerungseinheit (15) ausgebildet ist, eine Anzahl von erfassten Eingaben des Benutzers zu erfassen, wobei das vorbestimmte Kriterium wenigstens das Erreichen oder Überschreiten einer vorbestimmten Anzahl von erfassten Eingaben des Benutzers ist, ohne dass eine Funktion des elektronischen Geräts (1) ausgelöst wurde,
oder
die Steuerungseinheit (15) ausgebildet ist, eine Zeitdauer nach einer erfassten Eingabe des Benutzers zu erfassen, wobei das vorbestimmte Kriterium wenigstens das Erreichen oder Überschreiten einer vorbestimmten Zeitdauer nach einer erfassten Eingabe des Benutzers ist, ohne dass eine Funktion des elektronischen Geräts (1) ausgelöst wurde,
oder
die Steuerungseinheit (15) ausgebildet ist, eine Anzahl von erfassten Eingaben des Benutzers zu erfassen, und die Steuerungseinheit (15) ferner ausgebildet ist, eine Zeitdauer nach einer erfassten Eingabe des Benutzers zu erfassen, wobei das vorbestimmte Kriterium wenigstens das Unterschreiten einer vorbestimmten Anzahl von Eingaben vom Benutzer innerhalb einer vorbestimmten Zeitdauer nach einer erfassten Eingabe des Benutzers ist, ohne dass eine Funktion des elektronischen Geräts (1) ausgelöst wurde.

2. Elektronisches Gerät (1) nach Anspruch 1, **dadurch gekennzeichnet, dass**
das vorbestimmte Kriterium wenigstens die Zulässigkeit wenigstens einer Funktion des elektronischen Geräts (1) ist, welche in dem erfassten Betriebszustand des elektronischen Geräts (1) ausgelöst werden kann,
wobei die erfasste Eingabe des Benutzers keine zulässige Funktion des elektronischen Geräts (1) auslösen kann.

3. Elektronisches Gerät (1) nach einem der Ansprüche 1 oder 2, **dadurch gekennzeichnet, dass**
die vorbestimmte Anzahl von erfassten Eingaben des Benutzers und/oder die vorbestimmte Zeitdauer nach einer erfassten Eingabe des Benutzers von dem erfassten Betriebszustand des elektronischen Geräts (1) abhängt.

4. Elektronisches Gerät (1) nach einem der vorangehenden Ansprüche, **dadurch gekennzeichnet, dass**
die Steuerungseinheit (15) ferner ausgebildet ist, eine ausgewählte Menüebene zu erfassen,
wobei das vorbestimmte Kriterium und/oder eine vorbestimmte Anzahl von erfassten Eingaben des Benutzers und/oder eine vorbestimmte Zeitdauer nach einer erfassten Eingabe des Benutzers ferner von der erfassten Menüebene abhängt.

5. Elektronisches Gerät (1) nach Anspruch 7, **dadurch gekennzeichnet, dass**
wobei die erfasste Menüebene eine letzte Menüebene ist.

6. Elektronisches Gerät (1) nach Anspruch 7 oder 8, **dadurch gekennzeichnet, dass**
das vorbestimmte Kriterium wenigstens das Erreichen einer höheren Menüebene aufweist.

7. Elektronisches Gerät (1) nach einem der vorangehenden Ansprüche, **dadurch gekennzeichnet, dass**
die vorbestimmte Information eine Handlungsanweisung an den Benutzer, vorzugsweise ein Video, ist.

## Claims

1. Electronic device (1), preferably a domestic appliance (1), particularly preferably a beverage maker (1), in particular a fully automatic coffee machine (1),
comprising at least one display element (13) which is designed to display at least one piece of information to a user,
comprising at least one control element (14) which is designed to detect at least one input by the user, and
comprising at least one control unit (15) which is designed to receive the detected input by the user from the control element (14) and to generate the piece of information to be displayed to the user and to output said piece of information to the display element (13),
the control unit (15) also being designed to detect at least one operating state of the electronic device (1), and
the control unit (15) also being designed to compare at least the detected input by the user with at least one predetermined criterion,
the predetermined criterion depending on at least the detected operating state of the electronic device (1), and
the piece of information to be displayed depending on the result of the comparison (600), **characterised in that**
the control unit (15) is designed to detect a number of detected inputs by the user, the predetermined criterion being at least reaching or exceeding a predetermined number of detected inputs by the user without a function of the electronic device (1) being triggered, or
the control unit (15) is designed to detect a period of time after a detected input by the user, the predetermined criterion being at least reaching or exceeding a predetermined period of time after a detected input by the user without a function of the electronic device (1) being triggered, or
the control unit (15) is designed to detect a number of detected inputs by the user, and the control unit (15) is also designed to detect a period of time after a detected input by the user, the predetermined criterion being at least falling below a predetermined number of inputs by the user within a predetermined period of time after a detected input by the user without a function of the electronic device (1) being triggered.

2. Electronic device (1) according to claim 1, **characterised in that**
the predetermined criterion is at least the permissibility of at least one function of the electronic device (1) which can be triggered in the detected operating state of the electronic device (1),
it not being possible for the detected input by the user to trigger any permissible function of the electronic device (1).

3. Electronic device (1) according to either claim 1 or claim 2, **characterised in that** the predetermined number of detected inputs by the user and/or the predetermined period of time after a detected input by the user depends on the detected operating state of the electronic device (1).

4. Electronic device (1) according to any of the preceding claims, **characterised in that** the control unit (15) is also designed to detect a selected menu level,
the predetermined criterion and/or a predetermined number of detected inputs by the user and/or a predetermined period of time after a detected input by the user also depending on the detected menu level.

5. Electronic device (1) according to claim 7, **characterised in that**
the detected menu level is a last menu level.

6. Electronic device (1) according to either claim 7 or claim 8, **characterised in that** the predetermined criterion comprises at least reaching a higher menu level.

7. Electronic device (1) according to any of the preceding claims, **characterised in that** the predetermined piece of information is an instruction to the user, preferably a video.

## Revendications

1. Appareil (1) électronique, de préférence appareil électroménager (1), de manière particulièrement préférée préparateur de boissons (1), en particulier machine à café entièrement automatique (1),
comportant au moins un élément d'affichage (13), lequel est conçu pour afficher au moins une information à un utilisateur,
comportant au moins un élément de manipulation (14), lequel est conçu pour enregistrer au moins une entrée de l'utilisateur, et
comportant au moins une unité de commande (15), laquelle est conçue pour recevoir l'entrée enregistrée de l'utilisateur en provenance de l'élément de manipulation (14) et pour générer l'information à afficher à l'utilisateur et pour l'envoyer à l'élément d'affichage (13),
l'unité de commande (15) est en outre conçue pour enregistrer au moins un état de fonctionnement de l'appareil (1) électronique, et
l'unité de commande (15) est en outre conçue pour comparer au moins l'entrée enregistrée de l'utilisateur avec au moins un critère prédéterminé,
dans lequel le critère prédéterminé dépend d'au moins l'état de fonctionnement enregistré de l'appareil (1) électronique, et
dans lequel l'information à afficher dépend du résultat de la comparaison (600),
**caractérisé en ce que**
l'unité de commande (15) est conçue pour enregistrer un nombre d'entrées enregistrées de l'utilisateur, dans lequel le critère prédéterminé est l'atteinte et/ou le dépassement d'un nombre prédéterminé d'entrées enregistrées de l'utilisateur sans qu'une fonction de l'appareil (1) électronique ne soit déclenchée,
ou
l'unité de commande (15) est conçue pour enregistrer une période de temps après une entrée enregistrée de l'utilisateur, dans lequel le critère prédéterminé est l'atteinte et/ou le dépassement d'une période de temps prédéterminée après une entrée enregistrée de l'utilisateur sans qu'une fonction de l'appareil (1) électronique ne soit déclenchée,
ou
l'unité de commande (15) est conçue pour enregistrer un nombre d'entrées enregistrées de l'utilisateur, et l'unité de commande (15) est en outre conçue pour enregistrer une période de temps après une entrée enregistrée de l'utilisateur, dans lequel le critère prédéterminé est au moins le sous-dépassement d'un nombre prédéterminé d'entrées de l'utilisateur pendant une période de temps prédéterminée après une entrée enregistrée de l'utilisateur sans qu'une fonction de l'appareil (1) électronique ne soit déclenchée.

2. Appareil (1) électronique selon la revendication 1, **caractérisé en ce que**
le critère prédéterminé est au moins l'admissibilité d'au moins une fonction de l'appareil (1) électronique, lequel peut être déclenchée dans l'état de fonctionnement enregistré de l'appareil (1) électronique,
dans lequel l'entrée enregistrée de l'utilisateur ne peut déclencher aucune fonction admise de l'appareil (1) électronique.

3. Appareil (1) électronique selon l'une des revendications 1 ou 2, **caractérisé en ce que** le nombre prédéterminé d'entrées enregistrées de l'utilisateur et/ou la période de temps prédéterminée après une entrée enregistrée de l'utilisateur dépendent de l'état de fonctionnement enregistré de l'appareil (1) électronique.

4. Appareil (1) électronique selon l'une quelconque des revendications précédentes, **caractérisé en ce que**
l'unité de commande (15) est en outre conçue pour enregistrer un niveau de menu sélectionné, dans lequel le critère prédéterminé et/ou un nombre prédéterminé d'entrées enregistrées de l'utilisateur et/ou une période de temps prédéterminée après une entrée enregistrée de l'utilisateur dépendent en outre du niveau de menu enregistré.

5. Appareil (1) électronique selon la revendication 7, **caractérisé en ce que** le niveau de menu enregistré est un dernier niveau de menu.

6. Appareil (1) électronique selon la revendication 7 ou 8, **caractérisé en ce que** le critère prédéterminé comprend au moins l'atteinte d'un niveau de menu supérieur.

7. Appareil (1) électronique selon l'une quelconque des revendications précédentes, **caractérisé en ce que**
l'information prédéterminée est une consigne de manipulation à l'utilisateur, de préférence une vidéo.
